# EUROPÄISCHE PATENTSCHRIFT

(11) **EP 1 190 813 B1**
(45) Veröffentlichungstag und Bekanntmachung des Hinweises auf die Patenterteilung: **18.06.2003**
(21) Anmeldenummer: 00119043.8
(22) Anmeldetag: 02.09.2000
(51) Int. Cl.: B23Q 11/08, F16P 3/08

(54) **Schutztür für eine Werkzeugmaschine**
Safety door for a machine tool
Porte de sécurité pour une machine-outil

(43) Veröffentlichungstag der Anmeldung: 27.03.2002
(73) Patentinhaber: MASCHINENFABRIK BERTHOLD HERMLE AKTIENGESELLSCHAFT, D-78559 Gosheim (DE)
(72) Erfinder: Braunschweiger, Frank, 78559 Gosheim (DE)
(74) Vertreter: Vetter, Hans, Dipl.-Phys. Dr.

(56) Entgegenhaltungen:
- DE-A- 19 516 851
- DE-U- 9 202 074
- US-A- 4 742 609
- PATENT ABSTRACTS OF JAPAN vol. 018, no. 514 (M-1680), 28. September 1994 (1994-09-28) -& JP 06 179148 A (TOYODA MACH WORKS LTD), 28. Juni 1994 (1994-06-28)

## Beschreibung

Die Erfindung betrifft eine Schutztür für eine Werkzeugmaschine, zum Öffnen und Verschließen einer Zugangsöffnung zu einem Bearbeitungsraum, wobei die Schutztür zwischen einer die Zugangsöffnung freigebenden Schwenk-Offenstellung und einer die Zugangsöffnung verschließenden Schwenk-Schließstellung schwenkbar ist und wobei die Schutztür zumindest eine Durchgangsöffnung aufweist, die in geschlossenem Zustand der Schutztür einen Zugang zu dem Bearbeitungsraum ermöglicht. Die Erfindung betrifft ferner eine Schutzverkleidung für eine Werkzeugmaschine sowie eine Werkzeugmaschine, die jeweils mit einer Schutztür der genannten Art ausgestattet sind.

Eine derartige Schutztür ist aus der DE 195 16 851 C2 bekannt. Die dort beschriebene Schutztür ist Teil einer Schutzverkleidung für eine Werkzeugmaschine, die in ihrem Bearbeitungsraum Werkstücke bearbeitet. Die Schutztüre wird in den Bearbeitungsraum hinein über das jeweilige Werkstück hinweg geschwenkt, so dass das Werkstück für einen Bediener zugänglich ist. Zusätzlich ist eine kleinere Servicetür vorgesehen, die in geschlossenem Zustand der Schutztür nach außen aufschwenkbar ist. Über diese Servicetür sind Vorrichtungen im Bearbeitungsraum der Werkzeugmaschine, beispielsweise Werkzeuge, zugänglich. Für einen Werkstückwechsel steht nach Einschwenken der Schutztür in den Bearbeitungsraum hinein eine vergleichsweise große Beschickungsöffnung zur Verfügung, allerdings muss der Bearbeitungsraum so beschaffen sein, dass die Schutztür in diesen hineinschwenken kann.

Ferner sind als Schiebetüren ausgestaltete Schutztüren bekannt, die zum Freigeben einer Bearbeitungsraum-Zugangsöffnung zur Seite geschoben werden. Insbesondere bei breiten Zugangsöffnungen ragen derartige Schutztüren in Schiebe-Offenstellung häufig über die jeweilige Werkzeugmaschine hinaus, so dass neben der Werkzeugmaschine Platz benötigt wird. Werkzeugmaschinen mit derartigen Schiebe-Schutztüren können daher nicht unmittelbar nebeneinander aufgestellt werden. Ferner sind solche Schiebe-Schutztüren teilweise schwer und daher nur mit größerem Kraftaufwand bedienbar.

Es ist daher Aufgabe der vorliegenden Erfindung, eine Schutztür der eingangs beschriebenen Art derart weiterzubilden, dass sie platzsparend und leicht bedienbar ist.

Diese Aufgabe wird erfindungsgemäß dadurch gelöst, dass die Schutztür zumindest ein plattenartiges Schiebeelement zum Verschließen der Durchgangsöffnung aufweist, das vertikal zwischen einer die Durchgangsöffnung zumindest teilweise freigebenden Schiebe-Offenstellung und einer die Durchgangsöffnung verschließenden Schiebe-Schließstellung verschiebbar ist.

Zur Lösung der Aufgabe sind ferner eine Schutzverkleidung für eine Werkzeugmaschine sowie eine Werkzeugmaschine vorgesehen, die jeweils mit einer erfindungsgemäßen Schutztür ausgestattet sind.

Der Erfindung liegt dabei der Gedanke zu Grunde, dass für zahlreiche Arbeiten, bei denen ein Zugang zum Bearbeitungsraum erforderlich ist, beispielsweise beim Beschicken der Werkzeugmaschine mit Werkstücken, lediglich ein Teil der gesamten Zugangsöffnung freigegeben werden muss. Bei der erfindungsgemäßen muss dabei lediglich ein Schiebeelement zum Freigeben und Verschließen einer für diese Arbeiten vorgesehenen Durchgangsöffnung vertikal verschoben werden. Im Vergleich zur gesamten Schutztür ist das Schiebeelement wesentlich leichter und damit besser bedienbar. Ferner wird beim vertikalen Verschieben des Schiebeelements insgesamt wenig Raum beansprucht, seitlich neben der Werkzeugmaschine sogar gar kein Raum. Mit der erfindungsgemäßen Schutztür ausgestatte Werkzeugmaschinen können daher platzsparend unmittelbar nebeneinander aufgestellt werden. Für besonders häufige, über die Durchgangsöffnung durchführbare Bedienhandlungen muss zudem auch vor oder in der jeweiligen Werkzeugmaschine kein Bewegungsraum für die Schutztür freigehalten werden.

Vorteilhafte Ausgestaltungen der Erfindung ergeben sich aus den abhängigen Ansprüchen.

Vorzugsweise ist das Schiebeelement gleit- oder rollengeführt, so dass es besonders leicht verschiebbar ist. Die Rollen können dabei beispielsweise an dem Schiebeelement, die Rollenführung an der Schutztür angebracht sein oder umgekehrt.

Eine Hilfsvorrichtung, die vorzugsweise zumindest eine Gasdruckfeder oder eine andere Hilfsvorrichtung zur Gewichtsentlastung enthält, unterstützt das vertikale Verschieben des Schiebeelementes. Die Hilfsvorrichtung kann ferner derart ausgestaltet sein, dass sie zum gefahrlosen Durchgreifen der Durchgangsöffnung das Schiebeelement in Schiebe-Offenstellung hält.

In einer bevorzugten Ausgestaltung der Erfindung ragt das Schiebeelement in seiner Offenstellung vertikal über den Außenumfang der Schutztür hinaus. Dadurch kann die Fläche der Durchgangsöffnung im Verhältnis zur Gesamtfläche der Schutztür verhältnismäßig groß sein. Dabei ragt das Schiebeelement in einer bevorzugten Variante in Offenstellung nach oben hin über den Außenumfang der jeweiligen Werkzeugmaschine hinaus, was in Anbetracht von üblicherweise hohen Maschinenhallen besonders zweckmäßig ist. Prinzipiell könnte das Schiebeelement in Offenstellung auch in den Bearbeitungsraum oder in einen sonstigen Aufnahmeraum der Werkzeugmaschine oder der Schutzverkleidung hinein nach oben oder nach unten hin eintauchen.

In einer Werkzeugmaschine kommt bei der Bearbeitung von Werkstücken üblicherweise Bohrwasser oder ein sonstiges flüssiges Kühlmittel zum Einsatz, das unter anderem auch an die Schutztür spritzt. Daher ist an dem Schiebeelement in einer bevorzugten Variante der Erfindung eine Ablaufrinne angeordnet, so dass bei geöffnetem Schiebeelement an dem Schiebeelement ablaufende Flüssigkeit nicht in den Bereich der Durchgangsöffnung tropft und dabei beispielsweise den Arm eines Bedieners verschmutzt.

Vorzugsweise sorgen weitere Auffang- und Ablaufmittel dafür, dass die Schutztür aufgeschwenkt werden kann, ohne dass an der Schutztür ablaufende Flüssigkeit die Umgebung der Werkzeugmaschine verschmutzt. Dazu ist beispielsweise unterenends an der Schutztür eine Auffangwanne oder eine Auffangrinne angeordnet. Diese Auffanganordnung ist beispielsweise zur Scharnierseite der Schutztüre hin offen oder weist dort eine Ablauföffnung auf, damit die Flüssigkeit auch bei aufgeschwenkter Schutztür aus der Auffanganordnung in den Bearbeitungsraum hinein geleitet wird.

Zur Verriegelung des Schiebeelements ist zweckmäßigerweise eine Verriegelungsanordnung vorgesehen, die durch das Schiebeelement betätigt wird, wobei dann, wenn das Schiebeelement in Schiebe-Schließstellung verfahren wird, gleichzeitig die Schutztür in ihrer Schwenk-Schließstellung verriegelt wird. Eine spezielle Verriegelungshandlung durch einen Bediener ist somit nicht erforderlich, so dass die Schutztüre durch das sozusagen automatische Verriegeln beim Verschließen des Schiebeelementes komfortabel und sicher ist.

Zudem ist die Verriegelungsanordnung vorzugsweise mit einer Sicherheitsschalteranordnung versehen, die im Zusammenwirken mit einer Steuerung einer jeweiligen Werkzeugmaschine die Bearbeitung von Werktücken nur bei geschlossenem Schiebeelement freigibt.

Ein Ausführungsbeispiel der Erfindung ist in der Zeichnung dargestellt und wird in der nachfolgenden Beschreibung näher erläutert. Es zeigen:
- Figur 1: eine Vorderansicht einer erfindungsgemäßen Schutztür,

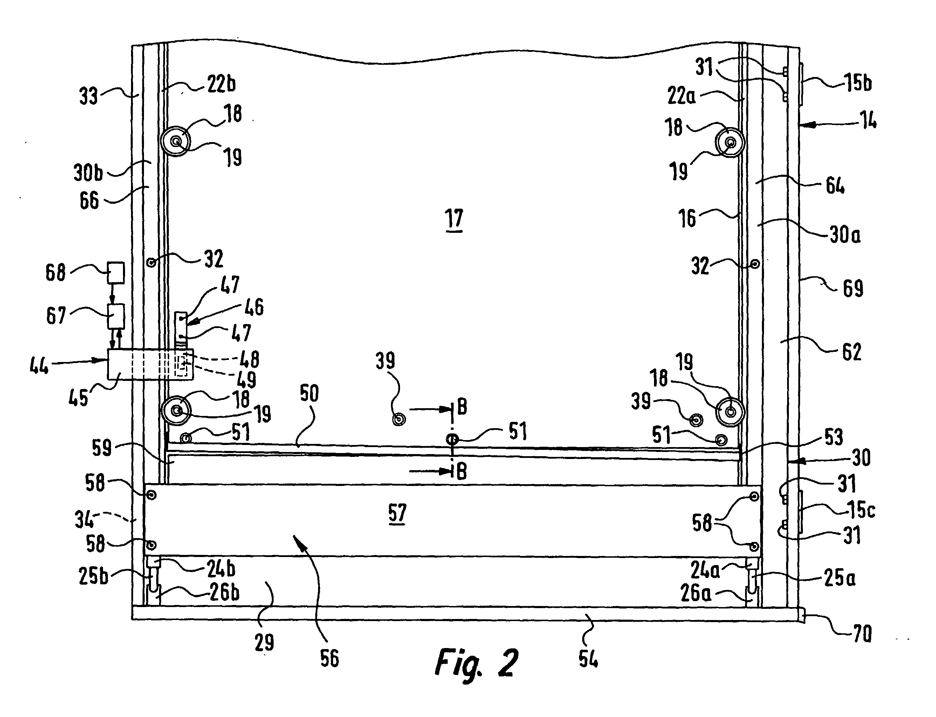

- Figur 2: den unteren Bereich der Rückansicht der Schutztür aus Figur 1,

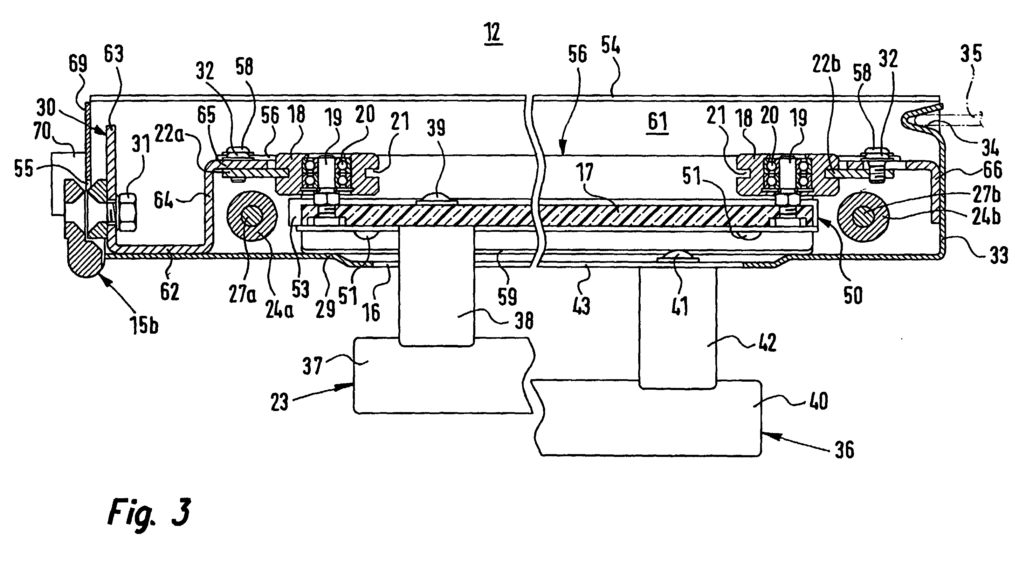

- Figur 3: einen Querschnitt der Schutztür aus Figur 1 entlang einer dort angegebenen Linie A-A,

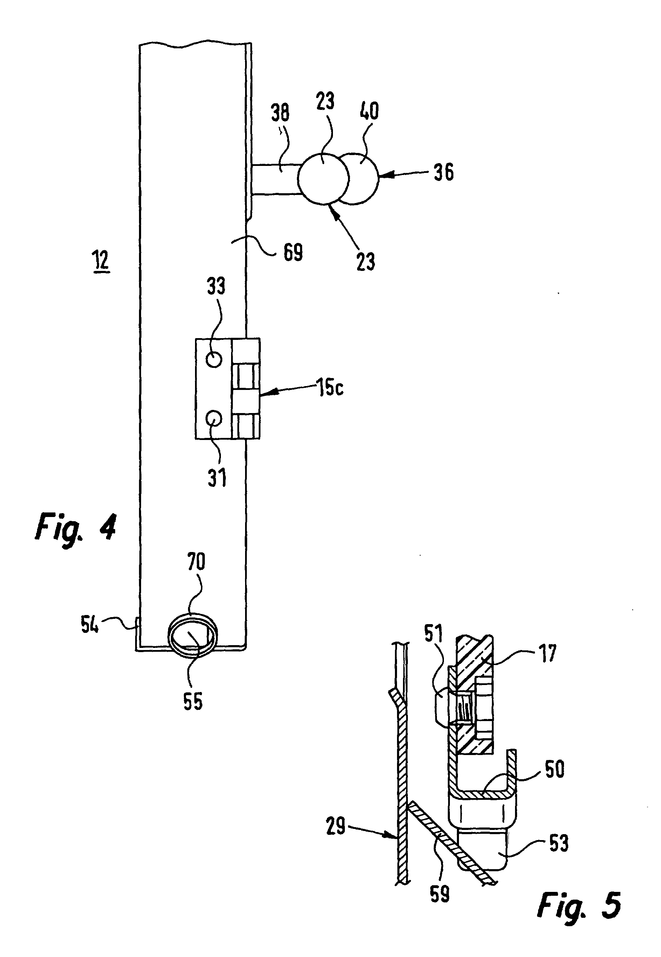

- Figur 4: den scharnierseitigen unteren Bereich der Schutztür aus Figur 1 in Seitenansicht und
- Figur 5: einen Teil-Querschnitt entlang einer Linie B-B in Figur 2.

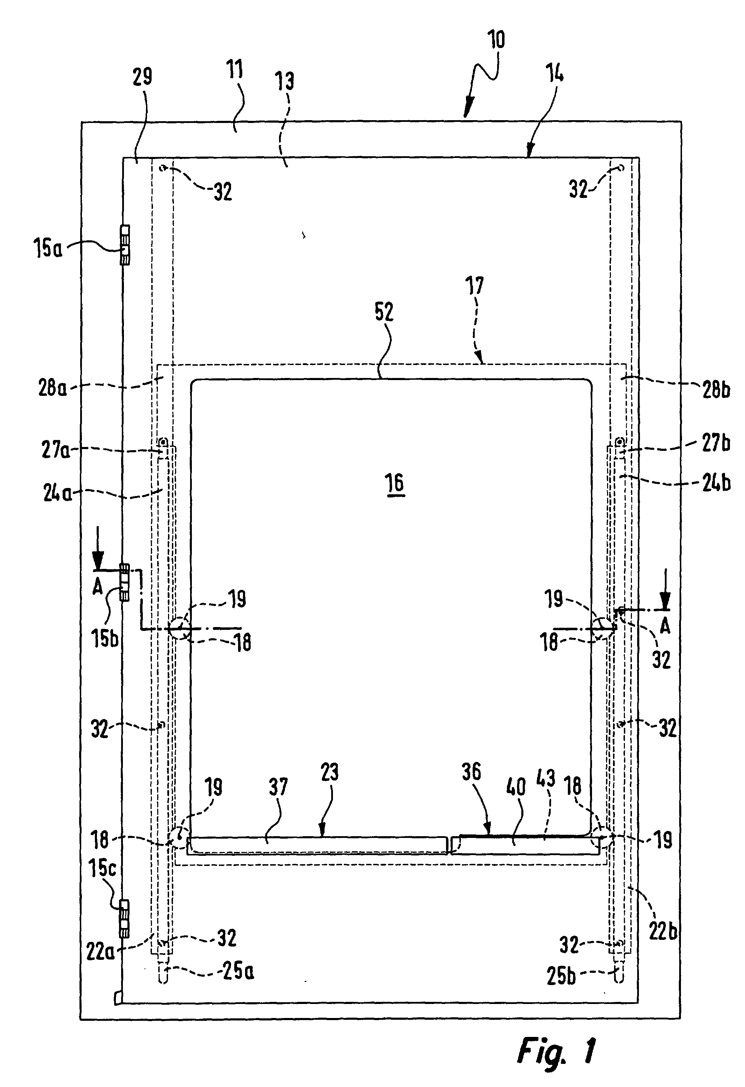

In Figur 1 ist ein Ausschnitt einer Schutzverkleidung 11 einer Werkzeugmaschine 10 gezeigt. Die Schutzverkleidung 11 begrenzt einen Bearbeitungsraum 12 der Werkzeugmaschine 10, in dem diese in den Figuren nicht dargestellte Werkstücke bearbeitet. In der Schutzverkleidung 11 ist eine durch eine Schutztür 14 verschließbare Zugangsöffnung 13 zu dem Bearbeitungsraum 12 vorgesehen. Die Schutztür 14 ist im Ausführungsbeispiel um eine im Wesentlichen vertikale Achse schwenkbar. Dazu ist die Schutztür 14 seitlich mit Scharnieren 15a, 15b, 15c an der Schutzverkleidung 11 oder der Werkzeugmaschine 10 nach außen aufklappbar angelenkt. Die Schutztür 14 könnte jedoch prinzipiell auch nach innen in den Bearbeitungsraum 12 schwenkbar sein. Ferner könnte die Schutztür 14 beispielsweise auch oben an der Schutzverkleidung 11 nach außen aufklappbar oder in den Bearbeitungsraum 12 hineinschwenkbar angelenkt sein.

In der Schutztür 14 ist eine Durchgangsöffnung 16 vorgesehen, die in geschlossenem Zustand der Schutztür 14 einen Zugang zu dem Bearbeitungsraum 12 ermöglicht. Die Durchgangsöffnung 16 ist durch ein plattenartiges Schiebeelement 17 verschließbar, das in Figur 1 in seiner die Durchgangsöffnung 16 verschließenden Schiebe-Schließstellung gezeigt ist. Das Schiebeelement 17 besteht vorzugsweise aus durchsichtigem Material, beispielsweise aus Kunststoff oder Sicherheitsglas, so dass der Bearbeitungsraum 12 für einen Bediener einsehbar ist.

Das Schiebeelement 17 ist rollengeführt. Dazu ist an der Schutztür 14 eine Rollen-Führungsanordnung mit Führungsschienen 22a, 22b zur Führung von Rollen 18 angeordnet, die an dem Schiebeelement 17 im Bereich von dessen Seitenkanten mit Befestigungsbolzen 19 angebracht sind. Die Befestigungsbolzen 19 sind beispielsweise in das Schiebeelement 17 eingeschraubt und/oder eingeklebt. Die Rollen 18 weisen an ihrem Außenumfang jeweils eine seilrollenartige Vertiefung 21 zur Aufnahme eines Randbereiches der Führungsschienen 22a, 22b auf. Die Rollen 18 sind mit Drehlagern 20, beispielsweise über Wälzlager, an den Befestigungsbolzen 19 drehbar gelagert. Alternativ könnten in den Rollen 18 z.B. auch Gleitbuchsen als Drehlager 20 vorgesehen sein. Das Schiebeelement 17 kann somit entlang der Führungsschienen 22a, 22b vertikal verschoben werden, wobei die Rollen 18 entlang den Führungsschienen 22a, 22b abrollen.

Andere Rollen-Führungsanordnungen sind ohne Weiteres möglich. Beispielsweise könnten Rollen an der Schutztür 14 angebracht sein, die jeweils an ihrem Außenumfang Vertiefungen aufweisen, in denen beispielsweise die vertikalen Seitenkanten des Schiebeelementes 17 geführt werden. In diesem Falle sind die Seitenkanten zur Vermeidung von Beschädigungen vorzugsweise mit einem Verstärkungsmantel ummantelt. Diese Ummantelung könnte beispielsweise durch einen das Schiebeelement 17 umfassenden Rahmen gebildet werden, der beispielsweise aus Metall oder einem verschleißarmen Kunststoff sein könnte. Das Schiebeelement 17 könnte auch anderweitig verschiebbar an der Schutztür 14 angeordnet sein, beispielsweise durch eine Gleitlagerung.

Das Schiebeelement 17 lässt sich nach oben hin nahezu vollständig aus dem Bereich der Durchgangsöffnung 16 hinausschieben. Dabei bildet dann die obere Kante 52 der Durchgangsöffnung 16 einen Anschlag für einen am unteren Endbereich des Schiebeelementes 17 angebrachten Griff 23. Alternativ hierzu kann der Hub des Schiebeelements 17 auch durch die Endlagen von Gasdruckfedern 24a, 24b begrenzt werden, auf die später noch näher eingegangen wird. Auch die Endlage einer Gasdruckfeder ist hierfür bereits ausreichend.

Im Ausführungsbeispiel ragt das Schiebeelement 17 in Schiebe-Offenstellung teilweise über den Außenumfang der Schutztür hinaus. Der überstehende Teil des Schiebeelementes 17 könnte zwar prinzipiell auch in einen Aufnahmeraum in Innern der Schutzverkleidung 11 oder der Werkzeugmaschine 10 eintauchen, jedoch ist der über die Werkzeugmaschine hinausragende, überstehende Bereich bei den üblicherweise hohen Fertigungshallen unproblematisch. Insgesamt kann durch diese Maßnahme die Durchgangsöffnung in ihrer vertikalen Ausdehnung verhältnismäßig groß sein, wobei das Schiebeelement 17 jeweils nahezu die gesamte Durchgangsöffnung in Schiebe-Offenstellung freigibt.

Das Verschieben des Schiebeelementes 17 wird durch eine Hilfsvorrichtung unterstützt. Die Hilfsvorrichtung weist die vertikal angeordneten Gasdruckfedern 24a, 24b auf, die jeweils seitlich neben dem Schiebeelement 17 angeordnet sind. Fußteile 25a, 25b der Gasdruckfedern 24 stützen sich auf im unteren Bereich der Schutztür 14 vorgesehenen Stützvorrichtungen 26a, 26b ab. Kolbenstangen 27a, 27b der Gasdruckfedern 24a, 24b, die in eingefahrener Stellung gezeigt sind, fahren beim Verschieben des Schiebeelementes 17 nach oben hin aus. Die Kolbenstangen 27a, 27b stützen sich mit ihrem oberen Ende jeweils an seitlich abstehenden Abstufungen 28a, 28b des oberen Bereichs des Schiebeelementes 17 ab. Die Gasdruckfedern 24 sind derart eingestellt, dass sie das Schiebeelement 17 in einer sozusagen schleichenden Aufwärtsbewegung in Richtung Schiebe-Offenstellung verschieben. Dadurch wird zugleich erreicht, dass das Schiebeelement 17 in Schiebe-Offenstellung gehalten wird und ein Bediener die Durchgangsöffnung 16 gefahrlos durchgreifen kann. Zusätzlich ist es auch möglich, dass eine separate Haltevorrichtung, beispielsweise eine Rastvorrichtung vorgesehen ist, die das Schiebeelement 17 in einer Schiebe-Offenstellung hält. Als Hilfsvorrichtung könnten ferner beispielsweise Schraubenfedern und/oder ein Seilzugmechanismus vorgesehen sein.

Die Schutztür 14 weist eine Vorderpartie 29 auf, aus der die Durchgangsöffnung 16 frontseitig fensterartig ausgeschnitten ist. Die Vorderpartie 29 begrenzt vorderseitig sowie seitlich einen zum Bearbeitungsraum 12 hin offenen Innenraum 61 der Schutztür 14. Dabei bildet scharnierseitig eine Scharnierseite 69 der Vorderpartie 29 und verschlussseitig eine der Scharnierseite 69 gegenüberliegende Verschlussseite 33 der Vorderpartie 29 eine Begrenzung des Innenraums 61. Die Vorderpartie 29 besteht beispielsweise aus Metallblech, könnte jedoch auch beispielsweise aus faserverstärktem Kunststoffmaterial bestehen.

Die Scharniere 15a bis 15c sind an einem Trägerteil 30 angeordnet, das eine Tragstruktur der Schutztür 14 bildet. Das Trägerteil 30 ist ein sich im Innenraum 61 vertikal erstreckendes Profilteil aus Metall mit einem im Wesentlichen U-förmigen Querschnitt, dessen Grundseite 62 koplanar zur Vorderseite der Schutztür 14 verläuft. Auf der Grundseite 62 liegt die Vorderpartie 29 auf und ist beispielsweise aufgeschweißt, aufgeklebt und/oder aufgeschraubt. An einem scharnierseitigen U-Schenkel 63 des Trägerteils 30, der koplanar zu der Scharnierseite 69 und zu dieser beabstandet angeordnet ist, sind die Scharniere 15a bis 15c mit Schrauben 31 befestigt. Der den Scharnieren 15a bis 15c abgewandte U-Schenkel 64 ist in seinem äußeren Bereich 65 von den Scharnieren 15a bis 15c weg weisend abgewinkelt. An dem abgewinkelten Bereich 65 ist mit Befestigungsbolzen 32 die Führungsschiene 22a angebracht.

An der Verschlussseite 33 ist eine V-förmige Einbuchtung 34 oder eine Ausnehmung ausgebildet, in die ein Schließbolzen 35 einer nicht weiter dargestellten Verriegelungsanordnung eingreift, so dass die Schutztür 14 gegen Schwenk-Öffnen verriegelt ist. Zum Schwenk-Öffnen lässt sich der Schließbolzen 35 aus der Einbuchtung heraus bewegen. Es ist jedoch auch möglich, dass an der Schutztür 14 eine gegen Schwenk-Öffnen verriegelnde Verriegelungsanordnung angeordnet ist, die beispielsweise einen Schließbolzen aufweist, der in eine an der Schutzverkleidung 11 oder der Werkzeugmaschine 10 angeordnete Ausnehmung eingreift.

An der Verschlussseite 33 ist ein sich längs an dieser erstreckendes Trägerelement 66 mit einem L-förmigen Querschnitt angebracht. Ein Schenkel des Trägerelementes 66 ist an der Verschlussseite 33 angeordnet und ist beispielsweise durch Verschweißen, Verkleben und/oder Verschrauben mit dieser verbunden. An dem anderen Schenkel des Trägerelementes 66 ist die Führungsschiene 22b mit Befestigungsbolzen 32 befestigt.

Der Griff 23, dessen Griffstange 37 mit Befestigungsbolzen 39 und Abstandsstücken 38 an dem Schiebeelement 17 in dessen unterem Bereich angeordnet ist, dient zum Verschieben des Schiebeelements 17, ein Griff 36 zum Schwenken der Schutztür 14. Der Griff 36 ist an einer Abstufung 43 der Vorderpartie 29 angeordnet, die im unteren Endbereich der Durchgangsöffnung 16 in diese hinein ragt. Der Griff 36 weist eine Griffstange 40 auf, die mit Befestigungsbolzen 41 und Abstandsstücken 42 an der Abstufung 43 befestigt ist.

Die Abstufung 43 und der Griff 36 erstrecken sich über einen der Verschlussseite 33 zugewandten Abschnitt der unteren Querabmessung der Durchgangsöffnung 16. Zur Scharnierseite 69 hin ist der Griff 23 zu dem Griff 36 in Querrichtung fluchtend an dem Schiebeelement 17 angeordnet, so dass sich die Griffe 23 und 43 insgesamt in etwa über die Querabmessung der Durchgangsöffnung 16 erstrecken.

Die Griffe 23 und 36 stehen verschieden weit von der Schutztür 14 ab, so dass für einen Bediener leicht erkennbar ist, welcher der Griffe 23, 36 zum Verschieben bzw. zum Schwenken vorgesehen ist. Selbstverständlich könnten die Griffe 23, 36 auch beide gleich weit von der Schutztür 14 vorstehen.

Ferner sind auch andere Griffanordnungen mit Griffstangen, Knäufen, Griffschalen oder dergleichen möglich. Beispielsweise könnte sich der Griff 23 über die gesamte Breite der Durchgangsöffnung 16 erstrecken und dabei z.B. nicht nur zum Verschieben des Schiebeelementes, sondern auch zum Schwenken der Schutztür vorgesehen sein.

Eine Verriegelungsanordnung 44 ist zur Verriegelung des Schiebeelementes 17 gegen Verschieben und der Schutztür 14 gegen Verschwenken vorgesehen. Die Verriegelungsanordnung 44 weist einen eine Aufnehmeranordnung bildenden, jedoch lediglich schematisch dargestellten Sicherheitsschalter 45 sowie einen ein Schließelement bildenden Betätiger 46 auf, der zur Verschlussseite 69 hin an dem Schiebeelement 17 mit Schrauben 47 als Befestigungsmittel angebracht ist. Der Sicherheitsschalter 45 ist an der Werkzeugmaschine 10 oder der Schutzverkleidung 11 angebracht und ragt im Ausführungsbeispiel von der Verschlussseite 33 her riegelartig quer in die Zugangsöffnung 13 hinein. Bei der praktischen Realisierung wird der Sicherheitsschalter allerdings bevorzugt senkrecht zur Zeichnungsebene angeordnet.

In Schiebe-Schließstellung greift der Betätiger 46 mit einer von dem Schiebeelement 17 vorstehenden, zu dem Sicherheitsschalter 45 hin zeigenden Zunge 48 in den Sicherheitsschalter 45 ein. Dabei rastet ein nicht dargestellter, als Sperrmittel dienender Schließbolzen des Sicherheitsschalters 45 in der Zunge 48 vorgesehene Rastöffnung 49 ein, so dass der Betätiger 46 nicht mehr aus dem Sicherheitsschalters 46 herausgezogen werden kann. Somit sind das Schiebeelement 17 gegen Verschieben und die Schutztür 14 gegen Aufschwenken verriegelt. Der nicht gezeigte Schließbolzen ist federbetätigt verriegelnd und kann elektromagnetisch oder, bei Stromausfall, mit Hilfe einer mechanischen Hilfsentriegelung entriegelt werden. Die mechanische Hilfsentriegelung sowie der Elektromagnet sind jeweils aus Gründen der Übersichtlichkeit nicht dargestellt. Da der Sicherheitsschalter 45 nach dem Ruhestromprinzip auch bei Stromausfall den Betätiger 46 verriegelt, kann der Sicherheitsschalter 45 auch als "Sicherheitsschalter mit Zuhaltung" bezeichnet werden. Es versteht sich, dass der Sicherheitsschalter 45 sowie der Betätiger 46 auch anderweitig angebracht sein können. Beispielsweise kann der Sicherheitsschalter 45 auch an einer im Bearbeitungsraum 12 angeordneten Haltevorrichtung angebracht sein und zu der Schutztür 14 hin aus dem Bearbeitungsraum 12 hervorstehen.

Die Verriegelungsanordnung 44 dient nicht nur der mechanischen Verriegelung der Schutztür 14 und des Schiebeelementes 17, sondern auch als sogenannte Sicherheitsschaltung, die mit nicht dargestellten Stellungsüberwachungsmitteln erfassen, ob der Betätiger 46 in den Sicherheitsschalter 45 momentan eingerastet ist oder nicht. Die jeweilige Stellung des Betätigers 46 meldet der Sicherheitsschalter 45 einer schematisch dargestellten Steuerung 67 der Werkzeugmaschine 10. Nur bei eingerastetem Betätiger 46, also bei geschlossener Schutztür 14 und geschlossenem Schiebeelement 17 sind, gibt die Steuerung 67 die Bearbeitung von Werkstücken im Bearbeitungsraum 12 frei.

Mit einem elektrischen Taster 68 kann zum Öffnen des Schiebeelementes 17 und/oder der Schutztür 14 der Befehl "öffnen" gegeben werden. Dieser Befehl wird zunächst an die Steuerung 67 der Werkzeugmaschine 10 gegeben, so dass diese eine gegebenenfalls in Gang befindliche Werkstückbearbeitung unterbrechen oder beenden kann. Erst anschließend, vorzugsweise nach einer vorbestimmten Wartezeit, gibt der Sicherheitsschalter 45 durch elektromagnetische Betätigung den Betätiger 46 frei, so dass das Schiebeelement 17 nach oben geschoben werden kann.

Die Schutztür 14 kann dann aufgeschwenkt werden, wobei noch der Schließbolzen 35 aus der Einbuchtung 34 herausgeschoben werden muss. Durch diese zusätzliche Verriegelung ist die Schutztür 14 gegen Aufschwenken verriegelt, wenn lediglich das Schiebeelement 17, beispielsweise zum Beschicken des Bearbeitungsraumes 12 mit Werkstücken, geöffnet wird.

Es ist selbstverständlich auch möglich, dass jeweils zur Verriegelung des Schiebeelementes 17 und der Schutztür 14 sowie für die Sicherheitsab- und Einschaltfunktionen jeweils getrennte Sicherheitsschaltmittel und/oder Verriegelungsmittel vorgesehen sind. Beispielsweise könnten durch das Schiebeelement 17 betätigte Endschalter und/oder beim Schwenken der Schutztür 14 betätigte Sensoren als Sicherheitsschalter an der Schutztüre 14 und/oder der Werkzeugmaschine 10 oder Schutzverkleidung 11 vorgesehen sein.

Beim Bearbeiten von Werkstücken im Bearbeitungsraum 12 wird zur Kühlung und Schmierung von Werkstücken und Werkzeugen eine Kühlflüssigkeit eingesetzt. Diese Flüssigkeit spritzt unter anderem auch innenseitig an die Schutztür 14. Wird die Schutztür 14 unmittelbar nach einem Arbeitsvorgang der Werkzeugmaschine 10 geöffnet, so läuft weiterhin Flüssigkeit an der Schutztür 14 ab. Damit ein Bediener beim Öffnen des Schiebeelements 17 oder die Umgebung beim Aufschwenken der Schutztür 14 in Richtung Schwenk-Offenstellung nicht verschmutzt werden, sind diverse Auffang- und Ablaufmittel zum Auffangen und Abführen von an der Schutztür ablaufender Flüssigkeit vorgesehen:

Am unteren Endbereich des Schiebeelements ist eine Ablaufrinne 50 angeordnet. Die Ablaufrinne 50 ist im Wesentlichen U-förmig und umschließt die Unterseite des Schiebeelementes 17, wobei ein tür-außenseitiger U-Schenkel auf dem Schiebeelement 17 aufliegt und mit Schrauben 51 an diesem befestigt ist. Der tür-innenseitige, im Vergleich zum tür-außenseitigen U-Schenkel kürzere U-Schenkel verläuft beabstandet zur Innenseite des Schiebeelementes 17. Die Grundsseite der Ablaufrinne 50 verläuft mit Abstand unterhalb der Unterseite des Schiebeelementes 17, so dass innenseitig an dem Schiebeelement 17 ablaufende Flüssigkeit von der Ablaufrinne 50 aufgefangen wird. Somit wird verhindert, dass an dem Schiebeelement 17 ablaufende Flüssigkeit einen Bediener der Werkzeugmaschine 10 beim Durchgreifen der Durchgangsöffnung 16 beschmutzt.

Bei entsprechender Dimensionierung der Ablaufrinne könnte diese zwar prinzipiell auch waagerecht, also parallel zur Unterseite des Schiebeelementes 17 verlaufen. Vorliegend ist sie jedoch zur Scharnierseite hin geneigt an dem Schiebeelement 17 schräg verlaufend angeordnet, so dass die Flüssigkeit gegebenenfalls zur Scharnierseite hin abläuft. Am scharnierseitigen Auslassende der Ablaufrinne 50 ist zudem eine als Abtropfanordnung dienende Lasche 53 angeordnet.

Zur Vermeidung von Verschmutzung durch abtropfende Flüssigkeit bei aufgeschwenkter Schutztür 14 weist diese an ihrem unteren Ende eine Auffangrinne 54 auf, in der an der Schutztür 14 ablaufende Flüssigkeit aufgefangen wird. Die Auffangrinne 54 wird zudem von vorn durch die Vorderpartie 29 sowie seitlich von der Verschlussseite 33 und der Scharnierseite 69 begrenzt, so dass insgesamt eine Auffangwanne gebildet wird.

In der Auffangwanne aufgefangene Flüssigkeit wird durch eine scharnierseitig, in der Scharnierseite 69 angeordnete Ablauföffnung 55 abgeleitet. Die Ablauföffnung 55 ist so ausgestaltet, dass die Flüssigkeit in Auffangmittel der Werkzeugmaschine 10, beispielsweise in einen unterhalb des Bearbeitungsraums 12 angeordneten Kühlmittelsumpf, auch bei aufgeschwenkter Schutztür 14 hineingeleitet wird. Dazu ist der Ablauföffnung 55 ein bei aufgeschwenkter Schutztür 14 in die Werkzeugmaschine 10 hineinragender Auslassstutzen 70 zugeordnet. Es ist jedoch auch möglich, dass bei entsprechender Anordnung der Ablauföffnung 55 oder Ausgestaltung der Werkzeugmaschine 10 der Auslassstutzen 70 zur Ableitung von Flüssigkeit in die Werkzeugmaschine 10 nicht erforderlich ist.

Weiterhin ist eine Ablaufblende 56 vorgesehen, die unterhalb des Schiebeelementes 17 angeordnet ist. Die Ablaufblende 56 ist ein in Querrichtung der Schutztür 14 verlaufendes, zweischenkliges Winkelstück, beispielsweise aus Stahlblech oder Kunststoff, mit einem zur Vorderseite der Schutztür 14 koplanaren Schenkel 57, der mit Schrauben 58 jeweils seitlich am U-Schenkel 64 bzw. am Trägerelement 66 befestigt ist. Ein zweiter Schenkel 59 steht zur Vorderpartie 29 hin schräg nach oben ab und dabei liegt teilweise mit seiner Vorderkante an dieser an. Die Ablaufblende 56 leitet gegebenenfalls an dem Schiebeelement 17 außenseitig ablaufende Flüssigkeit gezielt in die Wanne 54.

Weitere Abwandlungen der Erfindung sind selbstverständlich ohne Weiteres möglich, beispielsweise könnten an der Schutztür 14 mehrere jeweils durch Schiebeelemente verschließbare Durchgangsöffnungen vorgesehen sein. Ferner könnte ein nach unten öffnendes Schiebeelement vorgesehen sein. Es ist auch möglich, dass zum Verschließen einer Durchgangsöffnung mehrere Schiebeelemente vorgesehen sind, beispielsweise könnte zum Verschließen der Durchgangsöffnung 16 ein zweigeteiltes Schiebeelement vorgesehen sein, wobei zum Freigeben der Durchgangsöffnung 16 ein Teil des Schiebeelements nach unten hin verschoben wird und der andere Teil nach oben hin.

Anstatt der gezeigten Bauform mit einer Vorderpartie 29, Trägerteil 30 und Trägerelement sind auch andere Bauformen denkbar. Beispielsweise könnte eine rahmenartige Grund-Trägerstruktur vorgesehen sein, die nach außen hin verblendet ist. Alternativ könnte z.B. die Vorderpartie 29 derart verstärkt sein, dass die Scharniere 15a bis 15c unmittelbar an dieser angeordnet sein könnten.

Ferner ließe sich der Bedienkomfort der Schutztür 14 durch eine Antriebsvorrichtung für das Verschiebeelement 17 erhöhen. Beispielsweise könnten dazu die Gasdruckfedern 24 durch pneumatische oder hydraulische Antriebszylinder ersetzt werden oder könnte ein an der Schutztür 14 angeordneter Drehantrieb in eine an dem Schiebeelement 17 angeordnete Zahnstange eingreifen.

Weiter könnten auch zum Halten der Schutztür 14 in Schwenk-Offenstellung eine Schwenk-Haltevorrichtung und/oder ein Schwenk-Antrieb vorgesehen sein.

## Patentansprüche

1. Schutztür für eine Werkzeugmaschine (10), zum Öffnen und Verschließen einer Zugangsöffnung (13) zu einem Bearbeitungsraum (12), wobei die Schutztür (14) zwischen einer die Zugangsöffnung (13) freigebenden Schwenk-Offenstellung und einer die Zugangsöffnung (13) verschließenden Schwenk-Schließstellung schwenkbar ist und wobei die Schutztür (14) zumindest eine Durchgangsöffnung (16) aufweist, die in geschlossenem Zustand der Schutztür (14) einen Zugang zu dem Bearbeitungsraum (12) ermöglicht, **dadurch gekennzeichnet, dass** die Schutztür (14) zumindest ein plattenartiges Schiebeelement (17) zum Verschließen der Durchgangsöffnung (16) aufweist, das vertikal zwischen einer die Durchgangsöffnung (16) zumindest teilweise freigebenden Schiebe-Offenstellung und einer die Durchgangsöffnung (16) verschließenden Schiebe-Schließstellung verschiebbar ist.

2. Schutztür nach Anspruch 1, **dadurch gekennzeichnet, dass** das Schiebeelement (17) an der Schutztür (14) gleit- oder rollengeführt ist.

3. Schutztür nach Anspruch 1 oder 2, **dadurch gekennzeichnet, dass** sie eine das Verschieben des Schiebeelementes (17) in die Schiebe-Offenstellung unterstützende und/oder es dort haltende Hilfsvorrichtung aufweist, die vorzugsweise zumindest eine Gasdruckfeder (24) enthält.

4. Schutztür nach einem der Ansprüche 1 bis 3, **dadurch gekennzeichnet, dass** das Schiebelement in seiner Schiebe-Offenstellung vertikal vorzugsweise oben über den Außenumfang der Schutztür (14) hinausragt.

5. Schutztür nach einem der vorhergehenden Ansprüche, **dadurch gekennzeichnet, dass** sie um eine im Wesentlichen vertikale Achse schwenkbar ist.

6. Schutztür nach einem der vorhergehenden Ansprüche, **dadurch gekennzeichnet, dass** am unteren Endbereich des Schiebeelements (17) zumindest eine vorzugsweise schräg verlaufende Ablaufrinne (50) angeordnet ist.

7. Schutztür nach einem der vorhergehenden Ansprüche, **dadurch gekennzeichnet, dass** sie Auffang- und Ablaufmittel (54, 55, 56) zum Auffangen und Abführen von an der werkzeugmaschineninnenseitigen Innenfläche der Schutztür (14) ablaufender Flüssigkeit aufweist, wobei die Ablaufmittel (55) die Flüssigkeit vorzugsweise auch bei geöffneter Schutztür (14) in den Bearbeitungsraum (12) hinein leiten.

8. Schutztür nach Anspruch 7, **dadurch gekennzeichnet, dass** die Auffang- und Ablaufmittel (54, 55, 56) eine im unteren Endbereich der Schutztür (14) angeordnete Wanne (54) und vorzugsweise eine im unteren Endbereich der Schutztüre (14) an deren Scharnierseite angeordnete Ablauföffnung (55) enthalten.

9. Schutztür nach einem der vorhergehenden Ansprüche, **dadurch gekennzeichnet, dass** zumindest eine durch Verschieben des Schiebelementes betätigbare Verriegelungsanordnung (44, 45, 46) vorgesehen ist, die die Schutztür (14) und/oder das Schiebeelement (17) in der jeweiligen Schließstellung verriegelt, wenn das Schiebelement (17) in die Schiebe-Schließstellung gelangt.

10. Schutztür nach Anspruch 9, **dadurch gekennzeichnet, dass** mechanische oder elektrische Entriegelungsmittel für die Verriegelungsanordnung (44, 45, 46) vorgesehen sind, durch die gleichzeitig mit der Entriegelung der Betrieb der Werkzeugmaschine (10) blockierbar ist.

11. Schutztür nach einem der vorhergehenden Ansprüche, **dadurch gekennzeichnet, dass** sie eine Griffanordnung (23, 36) zum Schwenken der Schutztür (14) und/oder zum Verschieben des Schiebeelementes (17) aufweist, wobei die Griffanordnung vorzugsweise zum Schwenken und Verschieben jeweils zumindest einen separaten Griff (23, 36) aufweist und die Griffe (23, 36) in zumindest einer Achse fluchten.

12. Schutztür nach einem der vorhergehenden Ansprüche, **dadurch gekennzeichnet, dass** sie Bestandteil einer Schutzverkleidung (11) und/oder einer Werkzeugmaschine (10) ist.

13. Schutzverkleidung für eine Werkzeugmaschine (10) mit einer Schutztür (14) nach einem der vorhergehenden Ansprüche.

14. Werkzeugmaschine mit einer Schutztür (14) nach einem der vorhergehenden Ansprüche.

## Claims

1. Safety door for a machine tool (10), for opening and closing an access opening (13) to a machining zone (12), wherein the safety door (14) may be swivelled between a swivelled-open position releasing the access opening (13) and a swivelled-shut position closing the access opening (13), and wherein the safety door (14) has at least one through opening (16) allowing access to the machining zone (12) when the safety door (14) is closed, **characterised in that** the safety door (14) has at least one plate-shaped sliding element (17) to close the through opening (16), which may be slid vertically between a slid-open position at least partially releasing the through opening (16), and a slid-closed position closing the through opening (16).

2. Safety door according to claim 1, **characterised in that** the sliding element (17) is slide- or roller-guided on the safety door (14).

3. Safety door according to claim 1 or 2, **characterised in that** it has an auxiliary device, preferably containing at least one gas compression spring (24), which assists the sliding of the sliding element (17) into the slid-open position and/or holds it there.

4. Safety door according to any of claims 1 to 3, **characterised in that** the sliding element in its slid-open position extends vertically preferably at the top over the outer periphery of the safety door (14).

5. Safety door according to any of the preceding claims, **characterised in that** it may be swivelled around a substantially vertical axis.

6. Safety door according to any of the preceding claims, **characterised in that** there is a drainage channel (50), preferably running at an angle, at the bottom end area of the sliding element (17).

7. Safety door according to any of the preceding claims, **characterised in that** it has collecting and drainage means (54, 55, 56) for collecting and carrying away fluid running from the inner surface of the safety door (14) on the machine tool inside, wherein the drainage means (55) preferably also guide the fluid into the machining zone (12) when the safety door (14) is open.

8. Safety door according to claim 7, **characterised in that** the collecting and drainage means (54, 55, 56) contain a tray (54) mounted in the bottom end area of the safety door (14) and preferably a drainage hole (55) located in the bottom end area of the safety door (14) on its hinge side.

9. Safety door according to any of the preceding claims, **characterised in that** there is provided at least one locking assembly (44, 45, 46) actuable by sliding the sliding element and which locks the safety door (14) and/or the sliding element (17) in the respective closed position when the sliding element (17) is in the slid-closed position.

10. Safety door according to claim 9, **characterised in that** there are provided mechanical or electrical unlocking means for the locking assembly (44, 45, 46), by means of which operation of the machine tool (10) may be blocked to coincide with the unlocking.

11. Safety door according to any of the preceding claims, **characterised in that** it has a handle assembly (23, 36) for swivelling the safety door (14) and/or sliding the sliding element (17), wherein the handle assembly has preferably at least one separate handle (23, 36) for swivelling and sliding respectively, and the handles (23, 36) are aligned in at least one axis.

12. Safety door according to any of the preceding claims, **characterised in that** it is part of a safety cover (11) and/or a machine tool (10).

13. Safety cover for a machine tool (10) with a safety door (14) according to any of the preceding claims.

14. Machine tool with a safety door (14) according to any of the preceding claims.

## Revendications

1. Porte de protection pour une machine-outil (10), pour l'ouverture et la fermeture d'une ouverture d'accès (13) à une enceinte d'usinage (12), la porte de protection (14) pouvant pivoter entre une position pivotée d'ouverture dégageant l'ouverture d'accès (13), et une position pivotée de fermeture fermant l'ouverture d'accès (13), et la porte de protection (14) présentant au moins une ouverture de passage (16) qui, à l'état fermé de la porte de protection (14), permet un accès à l'enceinte d'usinage (12), **caractérisée en ce que** la porte de protection (14) comporte au moins un élément coulissant (17) de type plaque pour la fermeture de l'ouverture de passage (16), lequel peut coulisser verticalement entre une position coulissée d'ouverture dégageant au moins partiellement l'ouverture de passage (16) et une position coulissée de fermeture fermant l'ouverture de passage (16).

2. Porte de protection selon la revendication 1, **caractérisée en ce que** l'élément coulissant (17) est guidé glissant ou roulant sur la porte de protection (14).

3. Porte de protection selon la revendication 1 ou 2, **caractérisée en ce qu'**elle comporte un dispositif auxiliaire qui assiste le coulissement de l'élément coulissant (17) dans la position coulissée d'ouverture, et/ou le maintenant à cet endroit, et qui contient de préférence au moins un ressort de compression à gaz (24).

4. Porte de protection selon l'une des revendications 1 à 3, **caractérisée en ce que** dans sa position coulissée ouverte, l'élément coulissant dépasse verticalement, de préférence à la partie supérieure au-dessus du périmètre extérieur de la porte de protection (14).

5. Porte de protection selon l'une des revendications précédentes, **caractérisée en ce qu'**elle peut pivoter autour d'un axe sensiblement vertical.

6. Porte de protection selon l'une des revendications précédentes, **caractérisée en ce que** dans la zone terminale inférieure de l'élément coulissant (17) est disposée au moins une rigole d'écoulement (50) s'étendant de préférence obliquement.

7. Porte de protection selon l'une des revendications précédentes, **caractérisée en ce qu'**elle comporte des moyens de collecte et d'écoulement (54, 55, 56) pour recueillir et évacuer un liquide s'écoulant de la surface intérieure, côté intérieur de la machine-outil, de la porte de protection (14), les moyens d'écoulement (55) guidant le liquide à l'intérieur de l'enceinte d'usinage (12), de préférence même lorsque la porte de protection (14) est ouverte.

8. Porte de protection selon la revendication 7, **caractérisée en ce que** les moyens de collecte et d'évacuation (54, 55, 56) contiennent un bac (54) disposé dans la zone terminale inférieure de la porte de protection (14) ainsi que de préférence une ouverture d'écoulement (55) disposée dans la zone terminale inférieure de la porte de protection (14), sur le côté de ses charnières.

9. Porte de protection selon l'une des revendications précédentes, **caractérisée en ce qu'**il est prévu au moins un dispositif de verrouillage (44, 45, 46) qui peut être actionné par coulissement de l'élément coulissant et qui verrouille la porte de protection (14) et/ou l'élément coulissant (17) dans la position de fermeture respective, lorsque l'élément coulissant (17) parvient dans la position coulissée de fermeture.

10. Porte de protection selon la revendication 9, **caractérisée en ce que** des moyens mécaniques ou électriques de déverrouillage sont prévus pour le dispositif de verrouillage (44, 45, 46), par lesquels il est possible de bloquer le fonctionnement de la machine-outil (10), en même temps que le déverrouillage.

11. Porte de protection selon l'une des revendications précédentes, **caractérisée en ce qu'**elle comporte un dispositif de préhension (23, 36) pour le pivotement de la porte de protection (14) et/ou pour le coulissement de l'élément coulissant (17), le dispositif de préhension comportant de préférence au moins une poignée séparée (23, 36), respectivement pour le pivotement et le coulissement, et les poignées (23, 36) étant alignées dans au moins un axe.

12. Porte de protection selon l'une des revendications précédentes, **caractérisée en ce qu'**elle fait partie intégrante d'un habillage de protection (11) et/ou d'une machine-outil (10).

13. Habillage de protection pour une machine-outil (10) avec une porte de protection (14) selon l'une des revendications précédentes.

14. Machine-outil avec une porte de protection (14) selon l'une des revendications précédentes.
